Europäisches Patentamt

European Patent Office

Office européen des brevets

(11) Publication number: **0 060 050**
**A1**

## EUROPEAN PATENT APPLICATION

(21) Application number: **82300902.2**

(22) Date of filing: **23.02.82**

(51) Int. Cl.³: **C 10 G 11/18**
**B 01 J 8/18**

(30) Priority: **02.03.81 US 239776**

(43) Date of publication of application:
**15.09.82 Bulletin 82/37**

(84) Designated Contracting States:
**BE DE FR GB IT NL**

(71) Applicant: **MOBIL OIL CORPORATION**
**150 East 42nd Street**
**New York New York 10017(US)**

(72) Inventor: **McGovern, Stephen James**
**503 South Hampshire Drive**
**Deptford New Jersey(US)**

(72) Inventor: **Yeigh, John Houston, Jr.**
**2 Lanark Road**
**Turnersville New Jersey(US)**

(74) Representative: **Cooper, John Anthony et al,**
**Mobil Court 3 Clements Inn**
**London WC2A 2EB(GB)**

(54) Fluidized catalytic cracking regeneration process.

(57) In a fluid catalytic cracking process, the regeneration temperature can be eliminated as an operating constraint, catalyst losses can be held constant or reduced, the amount of residual carbon on the regnerated catalyst can be reduced and the coke-burning capacity of the regenerator can be increased by the combination of increasing the oxygen content of the air supplied to the regenerator and cooling the catalyst to maintain the regeneration temperature.

FIG.2

Croydon Printing Company Ltd.

0060050

FCC REGENERATION PROCESS

This invention relates to the regeneration of fluid catalytic cracking catalyst, and more especially to the use of oxygen-enriched regeneration gas and to the cooling of regenerated catalyst in a fluid catalytic cracking unit.

Fluidized catalytic cracking (FCC) of hydrocarbons is a well known procedure for producing gasoline, heating oil and diesel fuel. Normally in such processes a hydrocarbon charge, such as a vacuum gas oil, is contacted with hot, regenerated solid catalyst particles either in a fluidized bed reaction zone or an elongated riser reaction zone under cracking conditions for conversion of the hydrocarbon charge into cracked hydrocarbon products with the concommitant deposition of carbonaceous materials (coke) upon the catalyst; the cracked hydrocarbon vapors are separated from the coke-contaminated (spent) catalyst within the reaction zone, the cracked hydrocarbon vapors are recovered as product essentially free from entrained catalyst, and volatile hydrocarbons are stripped from the spent catalyst by contact with stripping vapors in a stripping zone; the coke-contaminated, stripped catalyst is regenerated in a regeneration zone by burning coke from the catalyst with a molecular oxygen-containing regeneration gas at an elevated temperature for restoring activity to the catalyst; and hot, regenerated catalyst is contacted with additional hydrocarbon charge in the reaction zone, as described above.

The catalyst and the hydrocarbon charge are maintained in contact at an elevated temperature for a period of time sufficient to effect the desired degree of cracking to lower molecular weight hydrocarbons typical of those present in motor gasoline and distillate fuels.

During the cracking reaction, coke is deposited on the catalyst particles in the reaction zone thereby reducing the activity of the catalyst for cracking and the selectivity of the catalyst for producing gasoline blending stock. In order to restore a major portion of its original activity to the coke-contaminated or spent catalyst, the catalyst is transferred from the reaction zone to a regeneration zone in which it is contacted with a molecular oxygen-containing regeneration gas, such as air, under conditions sufficient to burn at least a portion, preferably a substantial portion, of the coke from the catalyst. The regenerated catalyst is subsequently withdrawn from the regeneration zone and is reintroduced into the reaction zone together with additional hydrocarbon feed. Commonly, spent catalyst from the reaction zone is passed to a stripping zone for removal of strippable hydrocarbons from the catalyst particles prior to being transferred to the regeneration zone.

Typically, known regeneration zones comprise large, vertically-disposed, cylindrical vessels in which the spent catalyst is maintained in a fluidized state by the upward passage of a molecular oxygen-containing regeneration gas. The fluidized catalyst forms a dense phase catalyst bed in the lower portion of the vessel and a dilute catalyst phase containing entrained catalyst particles in the upper portion of the vessel with an interface existing between the two phases. Flue gas, which normally comprises gases arising from the combustion of the coke on the spent catalyst, inert gases such as nitrogen from the air, any unconverted oxygen and entrained catalyst particles, is then passed from the dilute catalyst phase into a solid-gas separator, for example a cyclone separator, within the regeneration zone to prevent excessive losses of entrained catalyst particles. The catalyst particles separated from the flue gas are returned to the dense phase catalyst bed. A substantially catalyst-free flue gas may then be passed from the separator, for example to a plenum chamber, for discharge from the top of the regeneration zone.

The fluid catalytic cracking processes in current use conventionally employ catalysts containing crystalline aluminosilicate type materials. Such catalysts usually comprise an amorphous matrix such as silica-alumina and a minor proportion of a crystalline aluminosilicate having uniform pore openings and which has been

F-0885-L                          -3-

ion-exchanged with rare earth ions, magnesium ions, hydrogen ions, ammonium ions and/or other divalent or polyvalent ions in order to reduce its sodium ion content.  These cracking catalysts are conventionally known in the art as "zeolite catalysts" and are commercially available.  Although these catalysts are subject to physical change, manifested as loss of crystallinity, from exposure to excessively high temperatures, it has been found that they may be subjected to temperatures of up to about 815°C without substantial damage to the physical structure of the aluminosilicate.  Thus, regeneration process variables may be adjusted to properly attain the desired residual carbon content on the regenerated catalyst, provided that the above temperature is not generally exceeded.

Since hydrocarbon cracking is an endothermic process and the burning of the coke from the spent catalyst is an exothermic process, most fluid catalytic cracking processes are designed to be heat balanced.  That is, the burning of the coke in the regenerator supplies sufficient heat, taking normal heat losses into account, to satisfy all of the heat requirements of the reactor.  There is a definite relationship between the amount of coke produced during cracking, the amount of coke burned off during the regeneration and the heat which the reactivated heated catalyst returns to the cracking process effected in the reactor.  Even this combination of relationships is not wholly independent and controllable because they are in turn partially influenced by the nature of the catalyst and its tendency to make more or less coke under given cracking conditions, as well as the nature of the petroleum fraction feed and its tendency to be converted to more or less coke under a given set of cracking conditions.

It has been the usual commercial practice carefully to balance all of the effects and countereffects in a fluid catalytic cracking system and to adjust feeds, residence times, catalyst and other operating conditions to achieve a heat-balanced operation. Thus, the type of feed, the feed rate, the feed temperature, the type of catalyst, the catalyst-to-oil ratio, the contact time, the reaction temperature and other variables are adjusted on the cracking side so as to produce as desirable a product slate as possible while depositing a sufficient amount of coke on the catalyst to satisfy the heat requirements of the system. In the regenerator, adjustments are made to the air inlet temperature, rate of air flow, ratio of $CO_2$ to CO produced and flue gas composition to provide the required heat balance.

It has previously been proposed to increase or vary the oxygen content of the regeneration gas introduced to the regenerator. For example, U.S. Patent 2,225,402 discloses improved catalyst reactivation utilizing a space velocity of at least 30 through the catalyst, a minimum pressure of at least two atmospheres and an oxygen concentration varying from 2.1 mole % at the beginning of the regeneration to 1.2% at the end. U.S. Patent 3,563,911 discloses a multistage fluidized catalyst regeneration process employing air, oxygen or oxygen-enriched air in all of the several stages. U.S. Patent 4,176,084 states that the poisoning effect of metal contaminants deposited on a catalyst may be reduced by periodically increasing the oxygen in excess of that which is required to completely burn the coke to $CO_2$. This may be achieved by increasing the rate of oxygen charged to the regenerator while maintaining the fresh feed and catalyst circulation rates constant or by maintaining the oxygen rate through the regenerator constant while decreasing the fresh feed and catalyst recirculation rates. This excess oxygen introduction may be employed for periods of up to 20% of the regeneration time.

It has previously been proposed also to employ catalytic cracking catalyst coolers to reduce the temperature of the catalyst during or after regeneration. For example, U.S. Patent 2,386,491 discloses the use of a catalyst cooler located outside the regenerator while U.S. Patent 3,223,650 describes the use of indirect heat exchange coils within the regenerator. U.S. Patent 4,064,039 removes the excess heat generated during regeneration of a coked catalyst which has incorporated therein a platinum group metal to promote the conversion of CO to $CO_2$. In that patent, the hot regenerated catalyst may be cooled either directly or indirectly either within or outside the regenerator. In one preferred technique, a portion of the catalyst is withdrawn from the regenerator, passed through an indirect water-cooled heat exchanger and reintroduced into the regenerator. In another configuration, the hot regenerated catalyst is subjected to indirect heat exchange while it is passing from the regenerator back to the reactor. In still another embodiment, internal cooling of the catalyst in the regenerator is accomplished by providing water-cooling for the cyclone separators in the upper portion of the regenerator.

The operation of the regenerator in many fluid catalytic cracking units is presently constrained by metallurgical temperature limitations, air blower capacity and/or excessive catalyst losses due to high vapor velocities within the regenerator. However, as fluid catalytic cracking feedstocks become heavier, the ability of regenerators to handle the increased coke loading will further limit the throughput or the severity of these fluid catalytic cracking units.

The present invention is based on the observation that by increasing the oxygen content of the regeneration gas passed into the regenerator and simultaneously cooling at least a portion of the catalyst during or after regeneration, substantial advantages accrue.

Accordingly, the present invention provides a process for the fluid catalytic cracking of a hydrocarbon feedstock which comprises contacting the feedstock with a cracking catalyst in a reactor under cracking conditions to produce cracked hydrocarbon vapors and coke-contaminated catalyst, regenerating the coke-contaminated catalyst in a regenerator at an elevated temperature with a molecular oxygen-containing regeneration gas to produce regenerated catalyst and a flue gas comprising oxides of carbon, and contacting the hot regenerated catalyst with fresh hydrocarbon feedstock wherein:

(a) the molecular oxygen-containing regeneration gas is oxygen-enriched air, and

(b) at least a portion of the catalyst is cooled during or after regeneration thereof to maintain the required elevated temperature within the regenerator.

In accordance with the process of the present invention, it has been found that by cooling the hot regenerated catalytic cracking catalyst either internally or externally of the regenerator in conjunction with increasing the oxygen content of the regeneration air, the regeneration temperature can be eliminated as an operating constraint; at the same time, catalyst losses may be held constant or even reduced by maintaining or reducing the gas velocity through the regenerator, the amount of residual carbon on the regenerated catalyst may be significantly reduced and the coke-burning capacity of the regenerator can be increased.

The process of the present invention can be applied to existing cracking units as part of a bottle-neck removal program or can be applied to the design of a grass roots plant for a potential saving in investment costs. As stated above, the invention involves increasing the oxygen content of the regeneration air introduced into the regenerator and cooling the catalyst during or after regeneration but before it contacts fresh cracking feedstock. The cooling operation removes the excess heat generated by the higher oxygen content of the regeneration gas, assuming constant superficial gas velocity and regeneration temperature. It is possible, however, by utilizing the invention to reduce the superficial gas velocity through the regenerator when higher oxygen-content gas is employed, and this will reduce the amount of cooling required to maintain a constant regeneration temperature.

Many fluid catalytic cracking units have sufficient excess capacity in vessels, piping, pumps, heat exchangers, furnaces, and other attendant equipment to accommodate a significantly increased feed rate to the unit. However, because of severe heat balance constrictions, the desired increase in feed rate often cannot be realized, and in this respect the capacity of the catalyst regenerator and its attendant equipment may be the limiting factors. Thus, metallurgical requirements may limit the maximum temperature at which the regenerator may be operated; in addition, the blower supplying regeneration air to the regenerator may be capacity limited; further, even where additional blower capacity is available, catalyst losses in the flue gas due to high gas velocities within the regenerator may prevent an increase in the fresh feed rate.

In accordance with the present invention, the oxygen content of the air introduced into the regenerator is increased. At constant regenerator gas velocity, oxygen enrichment will increase the potential coke burning capacity of the unit which in turn will permit operation at a higher conversion, at higher fresh feed rate and/or with poorer quality feed, that is a higher coke-making gas oil. The increased coke burning within the regenerator occasioned by the use of oxygen enriched air will, however, result in higher temperatures within the regenerator. These higher temperatures may create metallurgical problems within the regenerator and may also result in an upset of the heat balance between the regenerator and the reactor of the FCC unit. The second facet of this invention is directed to correcting these potential problems, and involves cooling the catalyst in order to maintain the regeneration temperature at its predetermined level and to maintain the unit in a heat balanced condition. However, where air blower capacity is a problem or catalyst emission losses are excessive, the invention can result in an alleviation of these problems, since by utilizing oxygen enrichment and by maintaining a constant total oxygen flow rate, the flow rate of the gas to the regenerator can be decreased with a resultant reduction in the superficial gas velocity through the regenerator and, consequently, a reduction in the catalyst losses in the flue gas from the regenerator. Air blower power requirement is thereby reduced because of the reduction in total gas flow rate. An additional benefit is that the amount of residual carbon on the regenerated catalyst can be significantly reduced in a constrained regenerator operation. The lower carbon level leads in turn to a higher effective catalyst activity with resultant improvements in the yield and quality of the gasoline produced in the cracking operation.

It is common practice in commercial fluid catalytic cracking units to employ air as the molecular oxygen-containing regeneration gas. When utilizing the process of the invention, air having an
enriched oxygen content must be used. This may be achieved by
continuously injecting quantites of oxygen from an oxygen supply into
the suction or the discharge of the air blower supplying regeneration
gas to the regenerator. The oxygen should be supplied so as to
provide oxygen-enriched air to the regenerator, i.e., to increase the
oxygen content of the air to the regenerator above the 21 mole %
oxygen content of the air. Preferably, the final oxygen content
should be from 22 to 35 mole %, more preferably from 23 to 26 mole %.
By adjusting the quantities of oxygen introduced into the regeneration
air and the rate of cooling of the catalyst, the desired regeneration
temperature, coke burning rate, residual carbon-on-catalyst and other
parameters may be readily controlled. Heat removal may be
accomplished by either removing heat from the regenerated catalyst or
removing heat from the flue gas leaving the regenerator vessel. The
heat removal techniques described in U.S. Patent 4,064,039 may be
employed; those techniques involve withdrawing a portion of the
catalyst from the regenerator and then lifting the catalyst with a gas
stream through a pipe passing through a water-cooled heat-exchanger
and then returning the cooled catalyst to either the dilute catalyst
phase in the regenerator or to the dense catalyst bed in the
regenerator. Alternatively, heat may be removed continuously from the
catalyst as it flows from the regenerator to the reactor by passing
the heated catalyst through an indirect water-cooled heat-exchanger.
In another alternative, internal cooling of the regenerator may be
provided by employing water-cooled cyclone separators in the dilute
phase of the regenerator. Still further, water-cooled coils located
within the dense bed of the catalyst may be utilized to remove excess
heat from the regenerator.

The following Example illustrates the invention. In the
Example, reference is made to the accompanying drawings, which show
the effect on various process parameters caused by increasing the
oxygen content of the inlet regeneration gas in a fluid catalytic
cracking unit having a fresh feed design rate specified in the

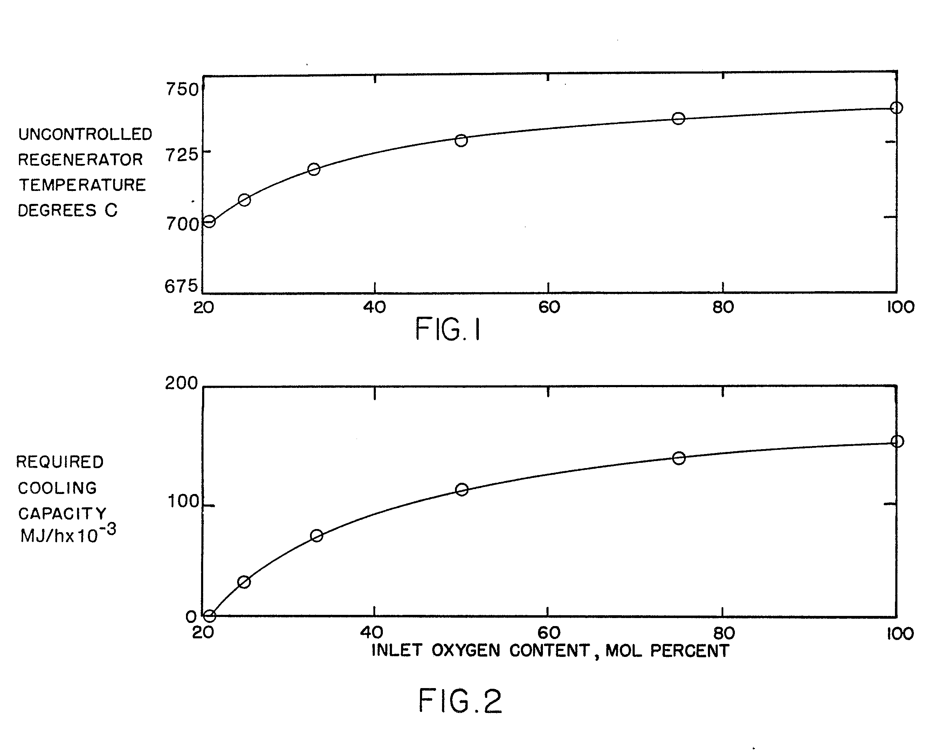

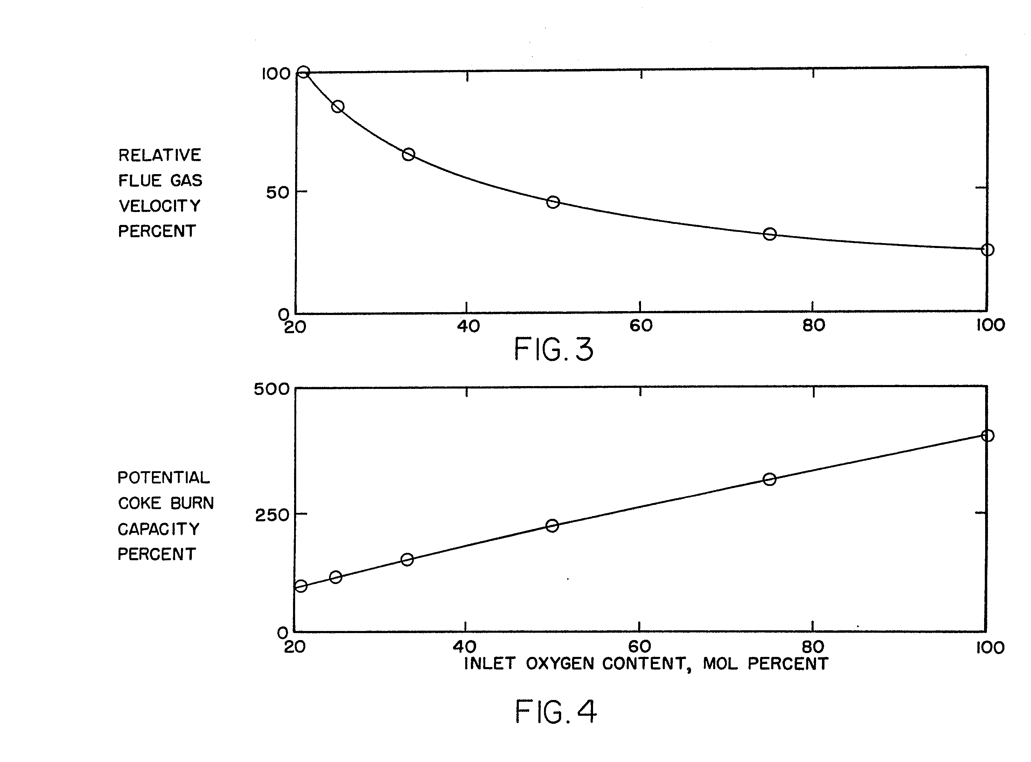

Example.  In the drawings, Figure 1 shows the relationship of
uncontrolled regenerator temperature and the oxygen content of the
regeneration gas; Figure 2 shows the effect of the inlet oxygen
content of regeneration gas on the cooling required to maintain a
constant regeneration temperature; Figure 3 shows the effect of inlet
oxygen content on the relative flue gas velocity; and Figure 4 shows
the effect of inlet oxygen content of the regeneration gas on the
coke-burning capacity of the regenerator.

## EXAMPLE

The process of this invention is illustrated utilizing a
fluid catalytic cracking unit having a fresh feed capacity of
15,900,000 liters per stream day (100,000 bbl/SD).  The coked catalyst
is removed from the reactor and passed to the regenerator where it is
regenerated at a predetermined temperature of about 702°C.  By
utilizing oxygen enrichment in accordance with the invention and
maintaining a constant regenerator superficial gas velocity, the
regenerator temperature will tend to increase by up to 38°C in the
limiting case of using pure oxygen.  Figure 1 shows that more
reasonable levels of oxygen enrichment, such as 25 or 33 mole %
oxygen, will increase the regenerator temperature by 7 and 17°C,
respectively.  In a similar fashion, Figure 2 shows the cooling
capacity required to maintain a constant regenerator temperature for
various concentrations of oxygen in the regenerator gas.  For example,
at a 50 mole % oxygen content in the inlet regenerator gas, a cooling
capacity in excess of 105,500 MJ per hour is required to maintain the
regenerator temperature at 702°C.  Catalyst coolers with a capacity of
31,650 to 152,000 MJ per hour are required for inlet oxygen
concentrations ranging from 25 to 100 %.  Catalyst coolers of this
capacity are well within the range of commercial fluid catalytic
cracking units.

Assuming a constant oxygen flow rate and constant regenerator
temperature, the regenerator flue gas velocity can be reduced significantly when utilizing the oxygen enrichment and catalyst
cooling features of the invention.  Figure 3 shows that at inlet
oxygen concentrations of 25 and 33 mole %, the regenerator flue gas
velocity can be reduced by approximately 15 and 35%, respectively.
Since catalyst losses from the regenerator cyclones vary approximately
in proportion to the flue gas velocity raised to the third power, this
oxygen enrichment is equivalent to about 40 and 70 % reductions in
catalyst losses, respectively.

At constant regenerator flue gas velocity and constant
regenerator temperature, the potential coke-burning capacity can be
increased in proportion to the inlet oxygen enrichment, up to a
theoretical limit of 400% with pure oxygen.  Figure 4 shows the
percentage increase in this potential coke-burning capacity in
relationship to the mole percent oxygen concentration of the
regenerator inlet gas.

The overall benefits of FCC regeneration with the oxygen
enrichment and catalyst cooling of the invention is summarized in
Table 1 below.  Based on fixed FCC operating conditions in the reactor
and constant regenerator flue gas velocity and constant regenerator
temperature, the practice of the invention translates the increased
coke-burning capacity into increased fresh feed rate.  Table 1 shows
that oxygen enrichment of 23 and 26 mole % permit 10 and 20 %
increases in fresh feed rate, respectively.  This requires between
7.93 and 16.1 million normal liters per hour of supplemental oxygen
and from 19,000 to 33,800 MJ per hour of catalyst cooling,
respectively.

F-0885-L                    -11-

## TABLE 1

|                                                          | BASE CASE | +10% FEED | +20% FEED | +50% FEED |
|----------------------------------------------------------|-----------|-----------|-----------|-----------|
| Potential Fresh Feed Rate, $1/SD \times 10^{-6}$         | 15.9      | 17.5      | 19.1      | 23.8      |
| Potential Coke Make Rate, $kg/h \times 10^{-3}$          | 29.1      | 32.0      | 34.9      | 43.6      |

OXYGEN ENRICHMENT REQUIRED

|                                                          | BASE CASE | +10% FEED | +20% FEED | +50% FEED |
|----------------------------------------------------------|-----------|-----------|-----------|-----------|
| $O_2$ Concentration, mol %                               | 21.0      | 23.2      | 25.5      | 32.3      |
| Supplemental $O_2$, $1/h \times 10^{-6}$                 | 0.0       | 7.93      | 16.1      | 39.9      |
| Total $O_2$, $1/h \times 10^{-6}$                        | 60.0      | 66.0      | 72.2      | 90.0      |
| Total $N_2$, $1/h \times 10^{-6}$                        | 226       | 219       | 211       | 189       |
| Total Gas to Regentr., $1/h \times 10^{-6}$              | 286       | 285       | 283       | 279       |

REGENERATOR CATALYST COOLER

|                                                          | BASE CASE | +10% FEED | +20% FEED | +50% FEED |
|----------------------------------------------------------|-----------|-----------|-----------|-----------|
| Duty Required to Maintain Constant Temperature, $MJ/h \times 10^{-3}$ | 0.0 | 19.0 | 33.8 | 68.6 |

CLAIMS:

1.  A process for the fluid catalytic cracking of a hydrocarbon feedstock which comprises contacting the feedstock with a cracking catalyst in a reactor under cracking conditions to produce cracked hydrocarbon vapors and coke-contaminated catalyst, regenerating the coke-contaminated catalyst in a regenerator at an elevated temperature with a molecular oxygen-containing regeneration gas to produce regenerated catalyst and a flue gas comprising oxides of carbon, and contacting the hot regenerated catalyst with fresh hydrocarbon feedstock, wherein

> (a)  the molecular oxygen-containing regeneration gas is oxygen-enriched air, and
>
> (b)  at least a portion of the catalyst is cooled during or after regeneration thereof to maintain the required elevated temperature within the regenerator.

2.  A process according to claim 1, wherein the oxygen-enriched air has an oxygen content of from 22 to 35 mole percent.

3.  A process according to claim 2, wherein the oxygen-enriched air has an oxygen content of from 23 to 26 mole percent.

4.  A process according to any one of claims 1 to 3, wherein a portion of the catalyst is withdrawn from the regenerator, cooled by indirect heat exchange and returned to the regenerator.

5.  A process according to any one of claims 1 to 4, wherein a portion of the catalyst is cooled by indirect heat exchange in the interior of the regenerator.

6.  A process according to any one of claims 1 to 5, wherein a portion of the regenerated catalyst is cooled by indirect heat exchange as it passes from the regenerator to the reactor.

FIG.I

FIG.2

RELATIVE
FLUE GAS
VELOCITY
PERCENT

FIG. 3

POTENTIAL
COKE BURN
CAPACITY
PERCENT

INLET OXYGEN CONTENT, MOL PERCENT

FIG. 4

# 0060050

## EUROPEAN SEARCH REPORT

Application number

EP 82 30 0902

### DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | US-A-2 883 335 (SMITH)<br><br>*Figure; claims 1,7,8; column 3, lines 50-53; column 7, lines 13-16* | 1,8,3-6 | C 10 G 11/18<br>B 01 J 8/18 |
| | --- | | |
| Y | US-A-4 243 634 (VICKERS)<br>*Figure 1; claims 1-5* | 1,5 | |
| | --- | | |
| D,Y | US-A-4 064 039 (PENICK)<br><br>*Figures 1-4; column 1, lines 32-33; column 6, lines 38-55* | 1,3-4,6 | |
| | ----- | | |

| TECHNICAL FIELDS SEARCHED (Int. Cl. 3) |
|---|
| C 10 G<br>B 01 J |

The present search report has been drawn up for all claims

| Place of search | Date of completion of the search | Examiner |
|---|---|---|
| THE HAGUE | 09-06-1982 | MICHIELS P. |